# EUROPÄISCHE PATENTSCHRIFT

(11) **EP 2 407 024 B1**
(45) Veröffentlichungstag und Bekanntmachung des Hinweises auf die Patenterteilung: **02.03.2016**
(21) Anmeldenummer: 11005537.3
(22) Anmeldetag: 07.07.2011
(51) Int. Cl.: A01F 15/08, A01F 15/12, A01F 21/00

(54) **Ballenpresse**
Baling press
Presse à empaqueter

(30) Priorität: 16.07.2010 DE 102010027539
(43) Veröffentlichungstag der Anmeldung: 18.01.2012
(73) Patentinhaber: Maschinenfabrik Bernard Krone GmbH, 48480 Spelle (DE)
(72) Erfinder: Brüning, Heiner, 48465 Suddendorf (DE)

(56) Entgegenhaltungen:
- EP-A1- 1 077 024
- EP-A1- 1 080 628
- EP-A1- 1 099 366
- EP-A1- 1 121 850
- EP-A2- 0 865 721

## Beschreibung

Die vorliegende Erfindung betrifft eine Ballenpresse, insbesondere zur Herstellung landwirtschaftlicher Erntegutballen mit den Merkmalen des Oberbegriffs des Anspruchs 1. Derartige Ballenpressen sind in verschiedenen Ausführungsformen, Größen und Antriebsvarianten bekannt. Am Markt durchgesetzt haben sich bisher jedoch fast ausschließlich an ein Zugfahrzeug anhängbare und von diesem antreibbare Rund- und Vierkantballenpressen. Die Vierkantballenpressen weisen einen Presskolben auf, der in einem Presskanal hin und her beweglich angeordnet ist und durch dessen Bewegung in den Presskanal eingeführtes Erntegut verdichtet und zu quaderförmigen Ballen geformt wird. Um den gepressten Ballen zusammenzuhalten, wird der Ballen mit Bindegarn oder dgl. Bindematerial gebunden. Dazu ist dem Presskanal eine Bindeeinrichtung zugeordnet, welche bei der mittlerweile bevorzugten Doppelbindung während des Pressvorgangs mittels einer Bindenadel dem Ballen einen oberen und einen unteren Faden zuführt, welche jeweils am Anfang und am Ende des jeweiligen Ballens miteinander verknüpft werden. Das Bindegarn wird von Bindegarnvorratsrollen abgewickelt, welche gewöhnlich in seitlich am Rahmen der Ballenpresse montierten Vorratsbehältern gelagert sind. Die Anzahl sowie die Anordnung der Bindegarnrollen in den Vorratsbehältern können stark variieren. Überwiegend werden jedoch mindestens 24 Bindegarnrollen inklusive Reservegarnrollen in den Vorratsbehältern stehend in übereinander und nebeneinander angeordneten Fächern gelagert.

Da sich die Anforderungen an Ballenpressen stetig verändern und immer höhere Pressdichten bei gleichzeitig steigendem Durchsatz erreicht werden sollen, ist es erforderlich, die Menge bzw. die Stärke des Bindegarns, mit dem die Ballen zusammengehalten werden, diesen Anforderungen anzupassen. Folglich muss als Tagesvorrat in den Vorratsbehältern eine größere Anzahl an Bindegarnrollen mitgeführt werden, was dazu führt, dass die Vorratsbehälter in ihrer Bauart zunehmend größer und somit unzugänglicher für den Anwender werden. Ebenso wird es schwieriger, sich mit geringem Aufwand einen Zugang zu den hinter den Vorratsbehältern liegenden Maschinenkomponenten zu verschaffen, um Wartungsarbeiten durchführen zu können. Aus dem Stand der Technik sind Ausführungen von Ballenpressen bekannt, bei denen ein- oder zweiteilige Vorratsbehälter jeweils seitlich klappbar angeordnet sind, siehe EP-A-1080628. Dadurch werden zwar die hinter den Vorratsbehältern liegenden Maschinenbauteile freigelegt und somit eine bessere Wartungsfreundlichkeit geschaffen, jedoch wird die Zugänglichkeit zu den Vorratsbehältern an sich nicht verbessert. Dadurch, dass die Vorratsbehälter lediglich zur Seite ausgeschwenkt werden, wird die Erreichbarkeit der Lagerfächer für die Bindegarnrollen nicht verbessert. So bleibt die Höhe der Vorratsbehälter relativ zu der Bodenfläche unverändert, weshalb ein Nachfüllen bzw. Entnehmen von Materialrollen in bzw. aus den Behältern weiterhin aufwendig bleibt. Ferner wird der Anwender bei der Beschickung der Ballenpresse mit Bindematerialrollen stets durch die großdimensionierte Bereifung der Maschine behindert, so dass die oberen Fächer der Behälter ohne Hilfsmittel oder unfallgefährdenden Arbeitsweisen kaum erreichbar sind.

Deshalb ist es Aufgabe der vorliegenden Erfindung, eine Ballenpresse der eingangs genannten Art zu schaffen, welche eine verbesserte Zugänglichkeit sowohl zu den hinter den Vorratsbehältern liegenden Maschineneinheiten als auch insbesondere zu den Vorratsbehältern an sich aufweist, um die Wartungs- und Bedienungsfreundlichkeit zu verbessern und zur Unfallverhütung beizutragen.

Erfindungsgemäß wird diese Aufgabe durch die Merkmale des Anspruchs 1 gelöst.

Vorteilhafte Ausgestaltungen sind Gegenstand der weiteren Ansprüche.

Zur Lösung der Aufgabe wird erfindungsgemäß eine Ballenpresse mit einem Vorratsbehälter für Binde- bzw. Wickelmaterial bereitgestellt, welcher in einer bevorzugten Ausführungsform in eine annährend zum Maschinenrahmen der Ballenpresse parallelen Beladestellung verlagerbar ist, welche gleichzeitig die Wartungsstellung darstellt, um insbesondere einen verbesserten Zugang zu dem Vorratsbehälter an sich und zu den in der Betriebsstellung von dem Vorratsbehälter verdeckten Maschinenkomponenten zu erlangen.

Bei einer gattungsgemäßen Quaderballenpresse mit Doppelknotensystem ist dem Presskanal eine Bindeeinrichtung zugeordnet, bei der dem Ballen während des Pressvorganges obere und untere Garnstränge zugeführt werden. Die unteren Fäden werden über ein Spannsystem durch Nadeln zugeführt; sie umschließen den Boden und die beiden Endseiten des Ballens. Die oberen Fäden werden dem Ballen direkt über ein Spannsystem zugeführt und schließen die Oberseite des Ballens. Das Bindegarn wird von Bindegarnvorratsrollen abgewickelt, welche vorzugsweise in zwei Vorratsbehältern gelagert sind, die in Fahrtrichtung links- und rechtsseitig der Ballenpresse angeordnet sind. Ebenso wäre es denkbar, die Vorratsbehälter an einer anderen Stelle der Ballenpresse anzuordnen, jedoch ist dies aufgrund des Platzmangels und der ungünstigen Fadenführung zu den Knüpfern nachteilig.

In einer erfindungsgemäßen Ausführungsform ist es vorgesehen, den bzw. die Vorratsbehälter durch eine Schwenkbewegung außerhalb des Projektionsbereiches der Räder in eine abgesenkte Beladestellung zu verlagern, so dass dem Anwender ein besserer Zugang zu dem Vorratsbehälter an sich und zu den hinter dem Vorratsbehälter liegenden Maschinenkomponenten verschafft wird. Diese Verlagerung kann vorzugsweise in einer einzigen Kurvenbahnbewegung, aber auch in mehreren voneinander unabhängigen Schwenk- und/ oder Linearbewegungen ausgeführt werden, so dass der Anwender zwischen einer zumindest annähernd parallel zum Hauptrahmen der Ballenpresse angeordnete Wartungsstellung oder einer weiterführenden abgesenkten Beladestellung wählen kann. Ferner könnte der Vorratsbehälter in einer weiteren Ausführung über eine an dem Rahmen der Ballenpresse angeordnete Vertikalachse zur Seite verschwenkt und darauffolgend nach unten abgesenkt werden. Die Verlagerung des Vorratsbehälters erfolgt, unabhängig von der Anzahl der Bewegungen, vorzugsweise durch einen Stellantrieb, welcher beispielsweise hydraulisch, elektrisch oder pneumatisch sein kann. Die hydraulische Ausführungsform ist u.a. aufgrund des geringen Bauraumbedarfs und des ohnehin vorhandenen Hydrauliksystems eine der vorteilhaftesten Lösungen.

Weiterhin wäre es denkbar, den Vorratsbehälter mittels Muskelkraft, unterstützt durch Kraftspeicher, wie z.B. Federn und/oder Ausgleichsgewichten, zu verlagern.

Damit das Bindegarn beim Verlagern des Vorratsbehälters nicht zu weit herausgezogen wird oder sich während des Einschwenkens in die Betriebsstellung nicht mit weiteren Bauteilen der Ballenpresse verfängt, wird das Bindegarn zusätzlich an Drehpunkten der Verstelleinrichtung geführt.

Des Weiteren wird durch entsprechende konstruktive Auslegung sowohl bei maximalem Pendelweg der Fahrzeugachsen der Ballenpresse als auch bei maximalem Lenkeinschlag der Räder bei einer eventuellen Lenkachse ein problemloses Verlagern der Vorratsbehälter in die Beladestellung ermöglicht, um ungewollte Kollisionen und dadurch verursachte Schäden an der Ballenpresse zu vermeiden.

Nach Erreichen der Belade- und Wartungsstellung soll die Beladehöhe des Vorratsbehälters, d.h. die Höhe des obersten Abschlusses des Behälters von der Bodenoberfläche aus, maximal in einem Bereich zwischen 1,3 m und 2,3 m liegen. Als eine vorteilhafte Höhe hat sich dabei jedoch ein Maß von 1,5 m bis 1,9 m herausgestellt, da in dieser Höhe ein müheloses Einlegen und Verknoten insbesondere der obersten Garnrollen garantiert ist. Jedes Garnfach kann ohne jede Art von Hilfsmitteln, wie z.B. eine zusätzliche Trittstufe, oder risikoreiche Vorgehensweisen, wie beispielsweise das Besteigen der Räder der Ballenpresse, erreicht werden, so dass der Anwender den Vorratsbehälter sicher und standfest vom Boden aus be- bzw. entladen kann.

Ferner sind Positionsabfragesensoren des Vorratsbehälters vorgesehen, welche in Verbindung mit Sicherheitsschaltungen der Pressensteuerung eine Fehlbedienung der Ballenpresse und dadurch verursachte Gefahren und Schäden vermeiden.

Durch die erfindungsgemäße Ausführung einer Ballenpresse wird sowohl mit geringem technischen Aufwand eine sichere und einfache Beladung des Behälters mit Bindegarn als auch ein problemloser Zugang zu den hinter dem Behälter liegenden Maschinenbauteilen ermöglicht.

Wenn auch am Beispiel Quaderballenpressen beschrieben, können die Erfindungsmerkmale ebenso auf Rundballenpressen und auf Vorratsbehälter für Wickelfolie beispielsweise an Press- Wickelkombinationen übertragen werden.

Somit ist entsprechend der Aufgabe der Erfindung eine Ballenpresse bereitgestellt, welche sich durch einen Vorratsbehälter für Binde- bzw. Wickelmaterialrollen auszeichnet, der ein einfaches und schnelles Wechseln der Binde- bzw. Wickelmaterialrollen ohne Hilfsmittel oder unfallgefährdenden Arbeitsweisen ermöglicht.

Die Erfindung soll nun anhand eines Ausführungsbeispiels näher erläutert werden:

### In der Zeichnung zeigt

- **Fig. 1.:**: eine gattungsgemäße schematisch dargestellte Großballenpresse in Seitenansicht
- **Fig. 2.:**: eine perspektivische Ansicht von vorne einer erfindungsgemäßen Großballenpresse, wobei zur besseren Erkennbarkeit der erfindungsrelevanten Bauteile die Maschinenverkleidungen und weitere Maschinenkomponenten entfernt sind.

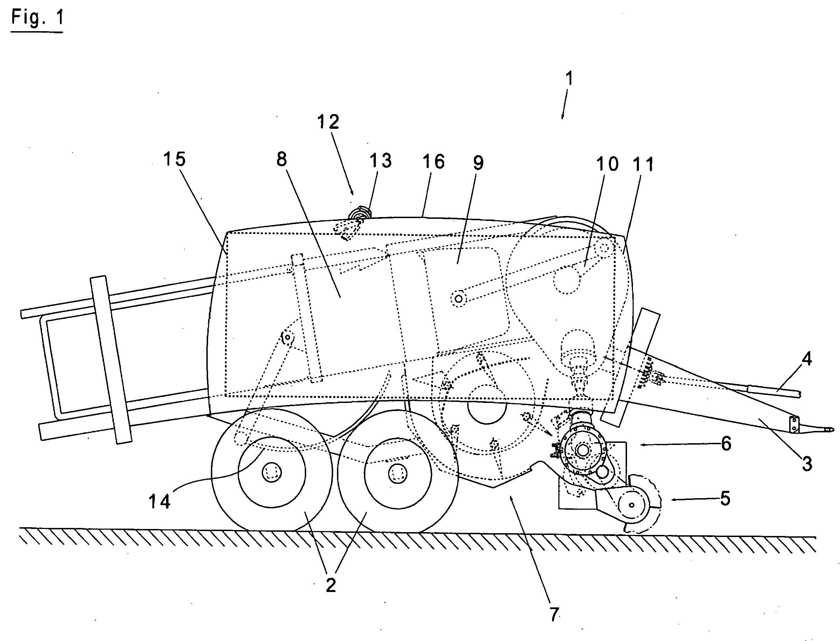

Fig. 1 zeigt eine landwirtschaftliche Großballenpresse 1 zur Erzeugung quaderförmiger Pressballen aus landwirtschaftlichem Erntegut, welche sich auf Rädern 2 zum Erdboden hin abstützt und über eine Zugdeichsel 3 von einem nicht dargestellten landwirtschaftlichen Ackerschlepper oder dergleichen Zugmaschine gezogen und über eine Gelenkwelle 4 angetrieben wird. Die Ballenpresse 1 verfügt in ihrem vorderen Bereich über eine Aufnahmeeinrichtung 5 zum Aufsammeln des Erntegutes vom Erdboden.

Nachfolgende Schneid- 6 und Fördereinrichtungen 7 führen das bearbeitete Erntegut einem Presskanal 8 zu. In dem Presskanal 8 ist ein Presskolben 9 hin- und herbeweglich angeordnet, welcher angetrieben von einem Kurbeltrieb 10 eines Hauptgetriebes 11 von der Fördereinrichtung 7 in den Presskanal 8 gefördertes Erntegut verdichtet. Oberhalb des Presskanals 8 befindet sich eine Bindeeinrichtung 12, welche aus mehreren in einer Reihe nebeneinander angeordneten Knüpfern 13 besteht. Die Knüpfer 13 sind dabei auf einer gemeinsamen, horizontal und quer zu dem Presskanal 8 ausgerichteten Knüpferwelle gelagert, über die sie auch gemeinsam angetrieben werden. Unterhalb des Presskanals 8 ist jedem Knüpfer 13 eine Nadel 14 zugeordnet, die der Zuführung des Bindegarns beim Beginn des Bindevorganges zu den Knüpfern 13 dient. Das Bindegarn für das Umschnüren des Ballens wird in Vorratsbehältern 15 gelagert, welche seitlich der Ballenpresse 1 zusammen mit einer klappbar am Vorratsbehälter 15 befestigten Schutzhaube 16 angeordnet sind, wobei die Schutzhaube 16 zum einen die Maschinenbauteile abdeckt und zum anderen den Innenraum des Vorratsbehälters 15 vor Staub und Schmutz schützt, so dass die Garnzuführung nicht negativ beeinflusst wird.

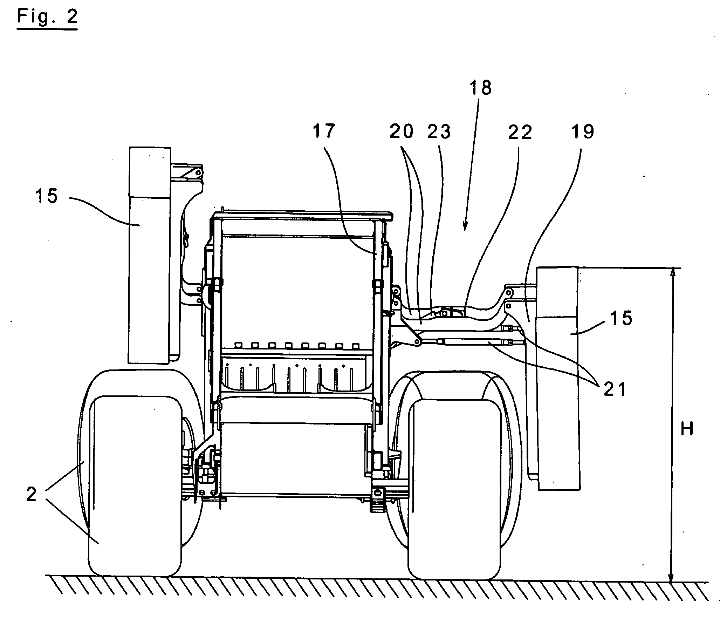

Die verlagerbaren Vorratsbehälter 15 einer in einer perspektivischen Frontansicht dargestellten Ballenpresse 1 in einer möglichen erfindungsgemäßen Ausführung sind in Fig. 2 gezeigt, wobei zur besseren Erkennbarkeit die Maschinenverkleidungen und einige nicht erfindungsrelevante Bauteile der Ballenpresse entfernt sind. Insbesondere wird die Stellung der Vorratsbehälter 15 linksseitig in der Betriebsstellung und rechtsseitig in der Beladestellung gezeigt. Dazu ist dem Hauptrahmen 17 der Ballenpresse 1 seitlich jeweils eine hydraulisch angetriebene Verstelleinrichtung 18 zugeordnet, welche den Vorratsbehälter 15 einschließlich der in der Fig. 2 nicht dargestellten Schutzhaube 16 in einer Schwenkbewegung in die Belade- und Wartungsstellung verlagert. Die Verstelleinrichtung 18 ist über einen Rahmen 19 mit dem Vorratsbehälter 15 verbunden, welcher zusätzlich als Verstärkung für den Vorratsbehälter 15 dient.

Der grundsätzliche Aufbau dieser in Fig. 2 dargestellten hydraulischen Verstelleinrichtung 18 des Ausführungsbeispiels besteht aus zwei oberen 20 und zwei unteren 21 schwenkbar gelagerten Auslegerarmen 20/21, welche zusammen ein Parallelogramm bilden und eine die oberen Auslegerarme 20 verbindende Querverstrebung 22. An der Querverstrebung 22 greift ein Hydraulikzylinder 23 an. Wird der Hydraulikzylinder 23 eingefahren, wird der Vorratsbehälter 15 durch die Auslegerarme 20/21 in einer Kurvenbahnbewegung über die Räder 2 hinweg und gleichzeitig auf eine für den Anwender günstige Höhe H nach unten verlagert. Durch Ausfahren des Hydraulikzylinders 23 wird der Vorratsbehälter 15 zurück in die Betriebsstellung an den Hauptrahmen 17 der Ballenpresse 1 geführt. Ebenso denkbar ist eine durch entsprechende konstruktive Auslegung der Verstelleinrichtung 18 erreichbare geneigte Belade- und Wartungsstellung des Vorratsbehälters 15, in welcher der Behälter 15 nicht senkrecht, sondern derart schräg angeordnet ist, dass er im oberen Bereich noch über die Räder 2 ragt.

In allen Ausführungsformen ist sowohl bei maximalem Pendelweg der Fahrzeugachsen als auch bei maximalem Lenkeinschlag der gelenkten Räder 2 durch ausreichenden Sicherheitsabstand der Vorratsbehälter 15 in allen Bewegungsphasen eine Kollision ausgeschlossen.

## Patentansprüche

1. Ballenpresse (1), insbesondere zur Herstellung landwirtschaftlicher Erntegutballen, welche als auf Rädern (2) gestützte, selbstfahrende oder als an eine Zugmaschine angehängte und angetriebene Erntemaschine das Erntegut mittels Aufnahme- (5) und Fördereinrichtungen (7) aufnimmt und einer Presseinrichtung (8) zuführt, die das Erntegut zu Ballen formt, wobei die Ballen für einen dauerhaften Zusammenhalt mit Binde- bzw. Wickelmaterial umspannt werden, welches von in einem an der Ballenpresse (1) angeordneten Vorratsbehälter (15) gelagerte Binde- bzw. Wickelmaterialrollen dem Ballen zugeführt wird, wobei der Vorratsbehälter (15) für die Binde- bzw. Wickelmaterialrollen für die Erreichbarkeit der in der Betriebsstellung von dem Vorratsbehälter (15) verdeckten Maschinenbauteile in eine Wartungsstellung verschwenkbar ist, **dadurch gekennzeichnet, dass** der zumindest eine Vorratsbehälter (15) für die Binde- bzw. Wickelmaterialrollen in eine Beladestellung verlagerbar ist, die gleichzeitig die Wartungsstellung darstellt, wobei zumindest größtenteils sein Abstand zur senkrechten Längsmittelebene der Ballenpresse (1) vergrößert und gleichzeitig sein Abstand zur Bodenoberfläche verringert wird.

2. Ballenpresse nach dem vorhergehenden Anspruch, **dadurch gekennzeichnet, dass** der zumindest eine Vorratsbehälter (15) in der Belade- und Wartungsstellung in einer Ansicht von oben gesehen zumindest größtenteils außerhalb des Projektionsbereiches der Räder (2) liegt.

3. Ballenpresse nach zumindest einem der vorhergehenden Ansprüche, **dadurch gekennzeichnet, dass** der zumindest eine Vorratsbehälter (15) in einer Bahnbewegung von der Betriebsstellung in die Belade- und Wartungsstellung und zurück verlagert wird.

4. Ballenpresse nach den Ansprüche 1 und 2, **dadurch gekennzeichnet, dass** der zumindest eine Vorratsbehälter (15) in zumindest zwei voneinander unabhängigen Bewegungen in die Belade- und Wartungsstellung und zurück verlagert wird.

5. Ballenpresse nach zumindest einem der vorhergehenden Ansprüche, **dadurch gekennzeichnet, dass** der zumindest eine Vorratsbehälter (15) mittels Muskelkraft und Unterstützung durch Kraftspeicher und/oder Ausgleichsgewichten in die Belade- und Wartungsstellung und zurück verlagert wird.

6. Ballenpresse nach zumindest einem der Ansprüche 1-4, **dadurch gekennzeichnet, dass** zumindest eine Teilbewegung bei der Verlagerung in die Belade- und Wartungsstellung und zurück durch einen Stellantrieb erfolgt.

7. Ballenpresse nach zumindest einem der Ansprüche 1-4, **dadurch gekennzeichnet, dass** die Verlagerung in die Belade- und Wartungsstellung und zurück komplett durch zumindest einen vorzugsweise hydraulischen und/oder elektrischen Stellantrieb erfolgt.

8. Ballenpresse nach zumindest einem der vorhergehenden Ansprüche, **dadurch gekennzeichnet, dass** die Höhe (H) des obersten Abschlusses des Vorratsbehälters (15) in der Belade- und Wartungsstellung von der Bodenoberfläche aus in einem Bereich zwischen 1,3 m und 2,3 m liegt.

9. Ballenpresse nach Anspruch 8, **dadurch gekennzeichnet, dass** die Höhe (H) des obersten Abschlusses des Vorratsbehälters (15) in der Belade- und Wartungsstellung von der Bodenoberfläche aus vorzugsweise in einem Bereich zwischen 1,5 m und 1,9 m liegt.

10. Ballenpresse nach den vorhergehenden Ansprüchen, **dadurch gekennzeichnet, dass** durch Sicherheitsschaltungen der Pressensteuerung in Verbindung mit Positionsabfragesensoren des Vorratsbehälters (15) eine Fehlbedienung der Ballenpresse (1) und dadurch verursachte Gefahren und Schäden vermieden werden.

## Claims

1. Baler (1), in particular for producing bales of agricultural crops, which, being a harvesting machine which is supported on wheels (2) and is self-propelled, or a driven harvesting machine which is hitched to a tractor, receives the crops by means of receiving (5) and handling (7) devices and feeds said crops to a pressing device (8) which forms the crops into bales, the bales being covered in binding or wrapping material so that said bales hold together in a long-lasting manner, which material is fed to the bales from reels of binding or wrapping material which are stored in a storage vessel (15) arranged on the baler (1), the storage vessel (15) for the binding or wrapping material being able to swivel into a maintenance position so as to provide access to the machine components that are covered by the storage vessel (15) when in the operating position, **characterised in that** the at least one storage vessel (15) for the binding or wrapping material can be moved into a loading position, which is also the maintenance position, the distance thereof from the vertical longitudinal mid-plane of the baler (1) being at least largely increased and, at the same time, the distance thereof from the ground surface being decreased.

2. Baler according to the preceding claims, **characterised in that**, when viewed from above, at least a large portion of the at least one storage vessel (15) lies outside the projection region of the wheels (2) when in the loading and maintenance position.

3. Baler according to at least one of the preceding claims, **characterised in that** the at least one storage vessel (15) is moved in a path motion from the operating position into the loading and maintenance position and back again.

4. Baler according to either claim 1 or claim 2, **characterised in that** the at least one storage vessel (15) is moved into and out of the loading and maintenance position in at least two motions which are independent of one another.

5. Baler according to any of the preceding claims, **characterised in that** the at least one storage vessel (15) is moved into and out of the loading and maintenance position by means of muscular power and with the aid of an energy storing device and/or balance weights.

6. Baler according to at least one of claims 1 to 4, **characterised in that** at least partial movement occurs when movement into and out of the loading and maintenance position takes place by means of an actuating drive.

7. Baler according to at least one of claims 1 to 4, **characterised in that** the movement into and out of the loading and maintenance position is achieved entirely by means of at least one preferably hydraulic and/or electric actuating drive.

8. Baler according to at least one of the preceding claims, **characterised in that** the height (H) from the uppermost end of the storage vessel (15) in the loading and maintenance position to the ground surface is within a range of between 1.3 m and 2.3 m.

9. Baler according to claim 8, **characterised in that** the height (H) from the uppermost end of the storage vessel (15) in the loading and maintenance position to the ground surface is preferably within a range of between 1.5 m and 1.9 m.

10. Baler according to the preceding claims, **characterised in that** incorrect operation of the baler (1) and hazards and damage caused thereby are prevented by means of safety circuits of the control unit of the baler in conjunction with the position-detecting sensors of the storage vessel (15).

## Revendications

1. Presse à balles (1) en particulier pour l'obtention de balles de produits de récolte agricoles réalisée sous la forme d'une machine de récolte s'appuyant sur des roues (2) autotractée ou entraînée par et attelée à une machine de traction, qui recueille les produits de récolte par l'intermédiaire de dispositifs de réception (5) et d'alimentation (7) et les transfère à un dispositif de compression (8) qui transforme les produits de récolte en balles, les balles étant entourées et serrées, pour permettre leur cohésion durable avec un matériau de liaison ou d'enroulement qui est transféré vers les balles à partir de rouleaux de matériau de liaison ou d'enroulement qui sont logés dans un réceptacle de stockage (15) monté sur la presse à balles (1), le réceptacle de stockage (15) des rouleaux de matériau de liaison ou d'enroulement pouvant être déplacé par pivotement dans une position de maintenance pour permettre d'avoir accès aux éléments de la machine recouverts par ce réceptacle (15) dans la position de fonctionnement,
**caractérisé en ce que**
le réceptacle de stockage (15) des rouleaux de matériau de liaison ou d'enroulement peut être déplacé dans une position de chargement qui correspond simultanément à la position de maintenance, au moins la plus grande partie de sa distance au plan longitudinal médian vertical de la presse à balles (1) étant augmentée et simultanément sa distance à la surface du sol étant diminuée.

2. Presse à balles conforme à la revendication précédente,
**caractérisée en ce que**
dans la position de chargement et de maintenance le réceptacle de stockage (15) est situé, considéré en vue de dessus, au moins dans sa plus grande partie à l'extérieur de la zone de projection des roues (2).

3. Presse à balles conforme à au moins l'une des revendications précédentes,
**caractérisée en ce que**
le réceptacle de stockage (15) est déplacé de la position de fonctionnement dans la position de chargement et de maintenance et inversement par un mouvement orbital.

4. Presse à balles conforme aux revendications 1 et 2,
**caractérisée en ce que**
le réceptacle de stockage (15) est déplacé dans la position de chargement et de maintenance et inversement par au moins deux mouvements indépendants l'un de l'autre.

5. Presse à balles conforme à au moins l'une des revendications précédentes,
**caractérisée en ce que**
le réceptacle de stockage (15) est déplacé dans la position de chargement et de maintenance et inversement par la force musculaire avec assistance d'un accumulateur de force et/ ou de poids d'équilibrage.

6. Presse à balles conforme à au moins l'une des revendications 1 à 4,
**caractérisée en ce que**
lors du déplacement dans la position de chargement et de maintenance et inversement au moins une partie du déplacement est effectuée par l'intermédiaire d'un vérin.

7. Presse à balles conforme à au moins l'une des revendications 1 à 4,
**caractérisée en ce que**
le déplacement dans la position de chargement et de maintenance et inversement est effectué dans sa totalité par au moins un vérin de préférence hydraulique et/ou électrique.

8. Presse à balles conforme à au moins l'une des revendications précédentes,
**caractérisée en ce que**
la hauteur (H) de la limite supérieure du réceptacle de stockage (15) dans la position de chargement et de maintenance est située dans une plage comprise entre 1,3 m et 2,3 m de la surface du sol.

9. Presse à balles conforme à la revendication 8,
**caractérisée en ce que**
la hauteur (H) de la limite supérieure du réceptacle de stockage (15) dans la position de chargement et de maintenance est de préférence située dans une plage comprise entre 1,5 m et 1,9 m de la surface du sol.

10. Presse à balles conforme à l'une des revendications précédentes,
**caractérisée en ce que**
des circuits de sécurité de la commande de la presse permettent d'éviter en liaison avec des capteurs de demande de position du réceptacle de stockage (15), un fonctionnement défectueux de la presse à balles (1) et les dangers et dommages qui en résultent.
